# EUROPÄISCHE PATENTSCHRIFT

(11) **EP 1 000 879 B1**
(45) Veröffentlichungstag und Bekanntmachung des Hinweises auf die Patenterteilung: **12.12.2001**
(21) Anmeldenummer: 98121769.8
(22) Anmeldetag: 16.11.1998
(51) Int. Cl.: B65G 21/20

(54) **Fördergurtaggregat für den Transport von Werkstücken**
Conveyor belt unit for transporting workpieces
Unité de bande transporteuse pour transporter des pièces d' oeuvre

(43) Veröffentlichungstag der Anmeldung: 17.05.2000
(73) Patentinhaber: Neuhäuser GmbH, 44532 Lünen (DE)
(72) Erfinder: Janzen, Klaus, 44534 Lünen (DE)
(74) Vertreter: Nunnenkamp, Jörg, Dr.

(56) Entgegenhaltungen:
- EP-A- 0 827 918
- DE-A- 3 001 531
- DE-A- 19 653 381

## Beschreibung

Die Erfindung betrifft ein Fördergurtaggregat für den Transport von Werkstücken, insbesondere für den hängenden Transport von tafelförmigen Werkstücken wie Blechen oder Platten, mit einem Fördergurt mit Gurtkörper und frontseitigen - den Werkstücken zugewandten - Saugein- oder -ausformungen, in welche Ansaugöffnungen münden, wobei die Ansaugöffnungen mit einem Unterdruckkanal in einer Haltevorrichtung mit Unterdruckvorrichtung in Verbindung stehen, wobei ferner der Fördergurt mit den hieran anzulegenden Werkstücken an der Unterdruckvorrichtung in Transportebenenrichtung vorbeigeführt und die Werkstücke durch Erzeugen von Unterdruck in dem Unterdruckkanal und damit an den Saugein- oder -ausformungen am Fördergurt festgehalten werden, und wobei ein den Gurtkörper mittels eines Schutzstreifens frontseitig übergreifender zusätzlicher Schutzgurt vorgesehen ist, welcher mit dem Fördergurt mitläuft und im Bereich einer Aufnahmestelle der Werkstücke auf dem Gurtkörper aufliegt. - Selbstverständlich ist neben einer Förderung mittels Unterdruck auch eine Förderung über den Fördergurt durchdringende Magnetfelder denkbar, wie sie grundsätzlich in der Haltevorrichtung gemäß DE 196 14 741 C1 beschrieben wird. Mit anderen Worten eignen sich derartige Fördergurtaggregate bzw. der zugehörige Fördergurt sowohl für den Transport von Werkstücken mittels Unterdruck als auch Magnetkraft. Im übrigen ist neben einem hängenden in jedem Fall auch ein aufliegender oder sogar vertikaler Transport möglich.

Ein Fördergurtaggregat bzw. ein zugehöriger Fördergurt der eingangs beschriebenen Ausgestaltung ist durch die DE 196 53 381 A1 bekannt geworden. Ähnliche Ausführungsformen sind Gegenstand der europäischen Patentanmeldung 0 827 918 A2 sowie der zuvor bereits angeführten DE 196 14 741 C2. In beiden letztgenannten Fällen sind anstelle Saugausformungen Saugeinformungen in Form von Unterdruckvertiefungen verwirklicht, welche jedoch im Kern die gleiche Funktion wie die Saugausformungen erfüllen, nämlich über hierin aufgebauten Unterdruck die an den Fördergurt anzulegenden Werkstücke festzuhalten. Neben dem vorerwähnten Stand der Technik sei noch auf die DE 30 01 531 A1 verwiesen, welche einen vergleichbaren Fördergurt mit auf eine Kernschicht aufgesetzten Erhebungen zeigt.

Beim Stand der Technik insbesondere nach DE 30 01 531 A1 besteht während des Transportes der Werkstücke, insbesondere bei deren Aufnahme an einer Aufnahmestelle die Gefahr, daß die üblicherweise über den Gurtkörper frontseitig vorkragenden Saugausformungen abgeschert oder sonstwie beschädigt werden können. Dies gilt auch für den Gurtkörper an sich, besonders, wenn es um die Förderung von verbeulten Blechen geht. D.h., auch die beschriebenen Fördergurte mit Saugeinformungen können beim Transport Beschädigungen erleiden. Aufgrund dieser Problematik hat man in der DE 196 53 381 A1 bereits vorgeschlagen, als Saugausformungen in ihrer Länge steuerbare Saugnäpfe einzusetzen. Zu diesem Zweck sind die Saugnäpfe mit einem Ring aus magnetischem Material derart verbunden, daß ihre Glocken unter Wirkung eines Magnetsystems in Richtung auf den Gurtkörper angezogen werden und sich somit in ihrer Länge verkleinern.

Die beschriebene Ausgestaltung setzt eine bestimmte Modifikation des Fördergurtes voraus, welche konstruktiv und kostenmäßig aufwendig ist. Außerdem ist nicht in jedem Fall eine funktionsgerechte Wirkung gewährleistet. Denn diese hängt letztlich von der Auslegung des Magnetsystems sowie des im Fördergurt angeordneten magnetischen Materials ab. Im übrigen lassen sich alterungsbedingte Änderungen der Magnetkraft kaum beherrschen. - Hier will die Erfindung insgesamt Abhilfe schaffen.

Der Erfindung liegt das technische Problem zugrunde, ein derartiges Fördergurtaggregat so weiter zu bilden, daß Beschädigungen des Fördergurtes bei konstruktiv einfacher Gestaltung und preisgünstigem Aufbau zuverlässig vermieden werden.

Zur Lösung dieser Aufgabe schlägt die Erfindung bei einem gattungsgemäßen Fördergurtaggregat für den Transport von Werkstücken vor, daß der Schutzstreifen im Zuge der Anlage der Werkstücke an den Fördergurt durch einen in Förderrichtung zwischen der Oberseite des Gurtkörpers und der Unterseite des Schutzstreifens einfahrenden und sich keilförmig öffnenden Abstandhalter von dem Gurtkörper abgehoben wird. Vorzugsweise ist der Schutzgurt längsrandseitig des Fördergurtes angeordnet. Der Übergriff des Schutzstreifens erfolgt dabei vollständig, zumindest jedoch teilweise bzw. sektionsweise. Dieser Schutzgurt kann stationär ausgebildet sein, so daß der an der Unterdruckvorrichtung vorbeigeführte Fördergurt gleichsam oberhalb des Schutzstreifens gleitet (bei hängendem Transport) bzw. an diesem entlanggleitet. Üblicherweise wird der Schutzgurt jedoch mit einer vorgegebenen Schutzgurtgeschwindigkeit bewegt. Diese Schutzgurtgeschwindigkeit des Schutzgurtes kann an eine Fördergeschwindigkeit des Fördergurtes im Sinne eines Synchronlaufes beider Gurte angepaßt sein. Im einfachsten Fall gelingt dies dergestalt, daß sowohl Fördergurt als auch Schutzgurt als Zahnriemen ausgeführt sind und über ein gemeinsames Antriebsrad in Förderrichtung bzw. in Transportebenenrichtung bewegt werden. Hierdurch stellt sich praktisch von selbst ein Synchronlauf beider Gurte ein.

Nach vorteilhafter Ausgestaltung ist der Schutzgurt im Querschnitt Z-förmig mit als ein Z-Schenkel ausgebildetem Schutzstreifen und als anderem Z-Schenkel ausgeführtem Führungsstreifen ausgebildet. Der Schutzstreifen übernimmt dabei die bereits beschriebene Funktion, den Gurtkörper frontseitig zu übergreifen und zumindest teilweise abzudecken. Dagegen dient der Führungsstreifen im allgemeinen dazu, für die Bewegung des Schutzgurtes zu sorgen. Zu diesem Zweck weist der Führungsstreifen üblicherweise auf der der Unterdruckvorrichtung bzw. Haltevorrichtung zugewandten Seite eine Verzahnung auf, so daß der Schutzgurt insgesamt als Zahnriemen ausgeführt ist. Beide Z-Schenkel, d.h., einerseits Schutzstreifen, andererseits Führungsstreifen, können parallel zueinander angeordnet sein, wobei der die beiden Z-Schenkel verbindende Z-Steg sich demgegenüber vertikal erstreckt.

Im allgemeinen wird so vorgegangen, daß zwei den Gurtkörper an seinen beiden Längsrandseiten mittels jeweiliger Schutzstreifen übergreifende Schutzgurte vorgesehen sind. Diese sich gegenüberliegenden Schutzgurte können zusammen mit dem Fördergurt in Transportebenenrichtung angeordnet sein. Hauptsächlich werden sie zusammen mit dem Fördergurt an der Haltevorrichtung bzw. Unterdruckvorrichtung vorbeigeführt, und zwar - wie bereits ausgeführt wurde - vorzugsweise mit aufeinander abgestimmter Schutzgurtgeschwindigkeit sowie Fördergeschwindigkeit, d.h., im Synchronlauf.

Der Vertikalabstand von Frontflächen der Saugausformungen und der Oberfläche der Schutzstreifen läßt sich variieren, damit im Bereich der Aufnahmestelle der Werkstücke ein einwandfreies Anlegen an den Fördergurt erreicht wird und ansonsten der Fördergurt bzw. insbesondere die Saugausformungen gegen Abscheren geschützt sind. Diese Variation des vorgenannten Vertikalabstandes wird üblicherweise so vorgenommen, daß dieser Abstand von der Aufnahmestelle der Werkstücke bis zu deren Anlage am Fördergurt von einem Aufnahmeabstand mit regelmäßig über die Schutzstreifen vorkragenden Saugausformungen bis zu einem Anlageabstand mit im wesentlichen koplanarer Anordnung der Frontflächen der Saugausformungen und der Oberfläche der Schutzstreifen abnimmt. Eine solche Ausgestaltung kann im Detail so realisiert werden, daß der Schutzgurt über seine Länge einen Schutzstreifen mit entsprechend variierender Dicke aufweist. Selbstverständlich muß für diesen Fall dafür gesorgt werden, daß von der Aufnahmestelle der Werkstücke bis zu ihrem Abwurf immer dafür Sorge getragen wird, daß der Schutzgurt mit dem entsprechend verdickten Bereich des Schutzstreifens synchron während dieser Phase mit dem Fördergurt läuft.

Üblicherweise wird jedoch so vorgegangen, daß die Schutzgurte mit dem Fördergurt (synchron) mitlaufen und die gleichbewegten Schutzstreifen im Bereich der Aufnahmestelle der Werkstücke auf dem Gurtkörper aufliegen und im Zuge der Anlage der Werkstücke an den Fördergurt von dem Gurtkörper abgehoben werden.

Im einzelnen sieht die Erfindung zum Abheben der Schutzstreifen vom Gurtkörper einen sich in Förderrichtung keilförmig öffnenden Abstandhalter vor, welcher zwischen der Oberseite des Gurtkörpers und der Unterseite des Schutzstreifens einfährt. Üblicherweise ist dieser Abstandhalter stationär an der Haltevorrichtung angebracht, so daß durch die Bewegung des Fördergurtes und des Schutzgurtes in Förderrichtung die vorgenannte Bewegung von selbst erfolgt. Alternativ oder zusätzlich kann zum Abheben des Schutzstreifens vom Gurtkörper auch so vorgegangen werden, daß eine in den Schutzgurt mit einem Führungssteg eingreifende Abstandsschiene zur Zwangsführung der Schutzgurte verwirklicht wird. Dieser Führungssteg läßt sich hinsichtlich seines Vertikalabstandes zur Unterseite der Haltevorrichtung variabel gestalten. Denkbar sind in diesem Zusammenhang Stellvorrichtungen, welche für eine entsprechende Änderung des Vertikalabstandes sorgen. Regelmäßig wird jedoch so vorgegangen, daß der Führungssteg schlicht und einfach einen über den Förderweg der Werkstücke veränderbaren Vertikalabstand zu der Unterseite der Haltevorrichtung aufweist, mithin ein entsprechendes Rampenprofil mit anschließendem Plateau besitzt.

Sofern Saugausformungen vorgesehen sind, handelt es sich üblicherweise um Saugnäpfe mit innenseitigen Noppen. Diese können dabei so gestaltet sein, wie dies in der europäischen Patentanmeldung 98 109 930.2-2308 beschrieben wird, auf welche ausdrücklich Bezug genommen sei. Dabei sind die Saugnäpfe üblicherweise schwenkbeweglich gestaltet, um auch verbeulte Bleche von einer Zuführeinrichtung aufnehmen zu können.

Durch die beschriebenen Maßnahmen der Erfindung wird im Ergebnis erreicht, daß ein ansonsten nicht modifizierter Fördergurt auf einfache und kostengünstige Art und Weise gegen Abscherungen seiner Saugausformungen geschützt wird. Selbstverständlich werden auch Oberflächenbeschädigungen des Gurtkörpers vermieden. Aufgrund der zusätzlichen Schutzgurte sind Nachrüstungen bestehender Anlagen unschwer möglich, auch weil auf vorhandene Aggregate (Haltevorrichtung, Antriebsräder usw.) zurückgegriffen werden kann. Im übrigen lassen sich durch das flexible und variable Abheben der Schutzstreifen Alterungseffekte des Fördergurtes unschwer ausgleichen.

Immer ist gewährleistet, daß im Aufnahmebereich der Werkstücke die gleichsam volle Beweglichkeit der Saugnäpfe zum Ergreifen und Festhalten auch stark verbeulter Bleche zur Verfügung steht. Im Förder- und Abwurfbereich sind die Saugnäpfe zwischen den Schutzgurten versenkt, so daß Abscherungen nicht auftreten können, wie sie beispielsweise durch fehlerhaft abgeworfene Bleche, Maschinenteile oder dergleichen hervorgerufen werden können.

Im folgenden wird die Erfindung anhand einer lediglich ein Ausführungsbeispiel darstellenden Zeichnung näher erläutert; es zeigen:
- Fig. 1: eine Haltevorrichtung mit erfindungsgemäßem Fördergurtaggregat in Seitenansicht,
- Fig. 2: eine Ansicht von unten auf den Gegenstand nach Fig. 1,
- Fig. 3: einen Schnitt durch Fig. 1 im Bereich der frontseitigen Antriebstrommel,
- Fig. 4: ebenfalls einen Schnitt durch Fig. 1 im Bereich des zwischen den Gurtkörper und den Schutzgurt eingefahrenen Abstandhalters,
- Fig. 5: eine andere Ausgestaltung der Erfindung,
- Fig. 6: eine Ansicht gemäß Fig. 2 mit einem abgewandelten Fördergurt sowie
- Fig. 7 und 8: Variationen des eingesetzten Fördergurtes.

In den Figuren ist ein Fördergurtaggregat für den Transport von Werkstücken W, insbesondere für den hängenden Transport von tafelförmigen Werkstücken W, wie Blechen oder Platten, mittels einer Haltevorrichtung 1 gezeigt. Bei dieser Haltevorrichtung 1 handelt es sich vorliegend um eine Unterdruckvorrichtung 1. Selbstverständlich sind auch kombinierte Unterdruck-/Magnetsysteme denkbar.

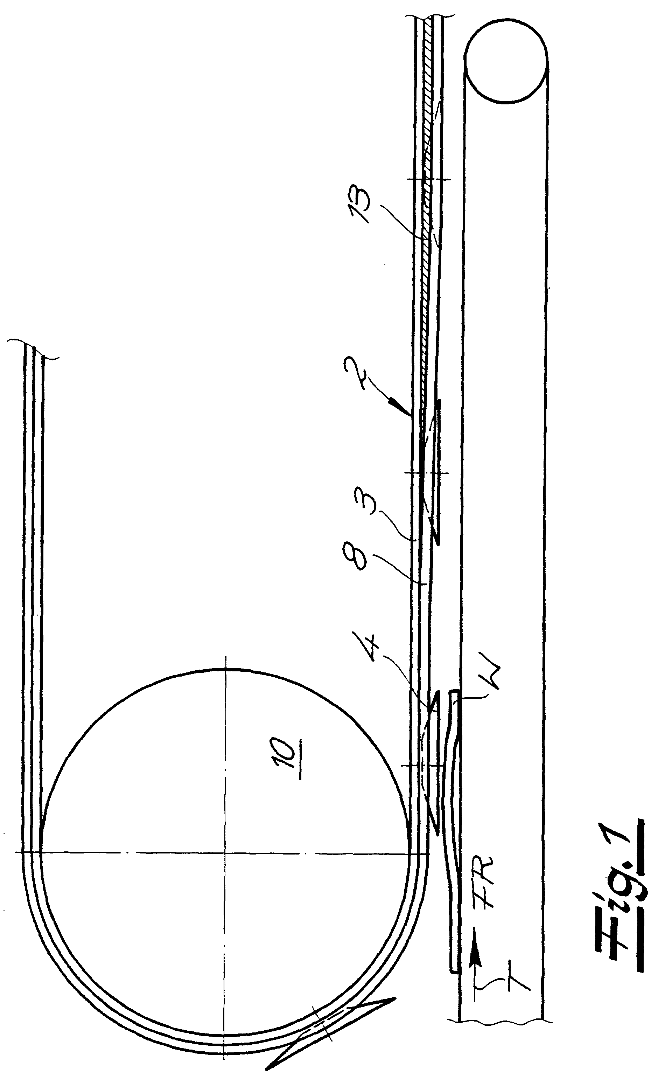

Dieses Fördergurtaggregat besteht in seinem grundsätzlichen Aufbau aus einem Fördergurt 2 mit Gurtkörper 3 und frontseitigen (nicht dargestellten) Saugeinformungen oder Saugausformungen 4. In diese Saugausformungen 4, welche vorliegend als Saugnäpfe 4 mit innenseitigen Noppen 5 ausgeführt sind, münden Ansaugöffnungen 6. Diese Ansaugöffnungen 6 stehen mit einem Unterdruckkanal 7 in der Haltevorrichtung bzw. Unterdruckvorrichtung 1 in Verbindung. Der Fördergurt 2 wird mit den hieran anzulegenden Werkstücken W an der vorgenannten Haltevorrichtung bzw. Unterdruckvorrichtung 1 in Transportebenenrichtung T vorbeigeführt. Auf diese Weise werden die Werkstücke W durch Erzeugen von Unterdruck in dem Unterdruckkanal 7 und damit an den Saugausformungen 4 am Fördergurt 2 festgehalten, nachdem sie von einer in Fig. 1 angedeuteten Zuführvorrichtung aufgenommen wurden. Selbstverständlich ist auch ein magnetisches Festhalten der Werkstücke W möglich, dann nämlich, wenn die Haltevorrichtung 1 zusätzlich oder alternativ eine Magnethaltevorrichtung aufweist, wie dies grundsätzlich in der DE-PS 196 14 741 oder der DE-OS 196 53 381 beschrieben wird. Für diesen Fall kann der Fördergurt 2 zusätzliche Stahllitzen in seinem Gurtkörper 3 aufweisen.

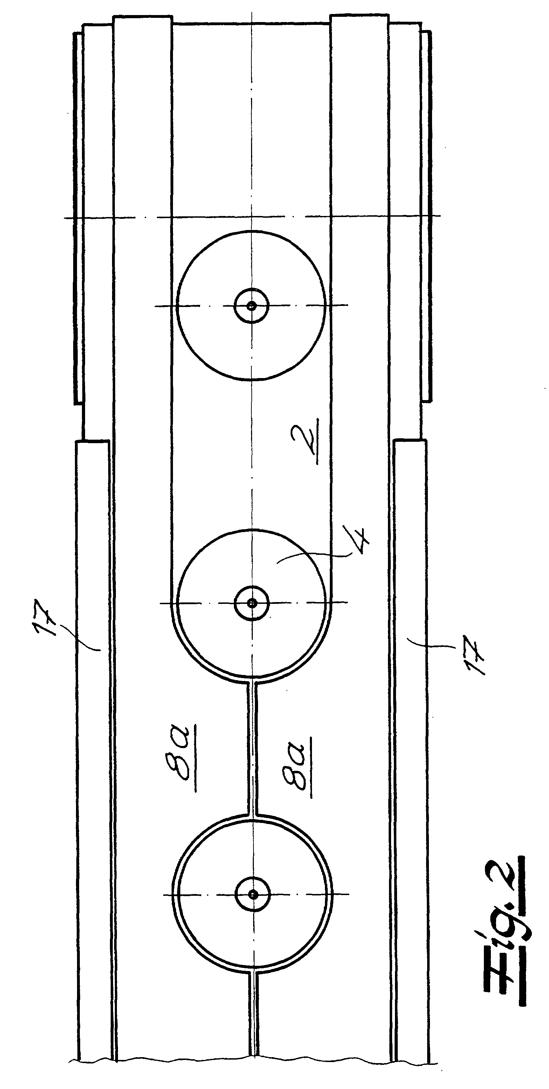

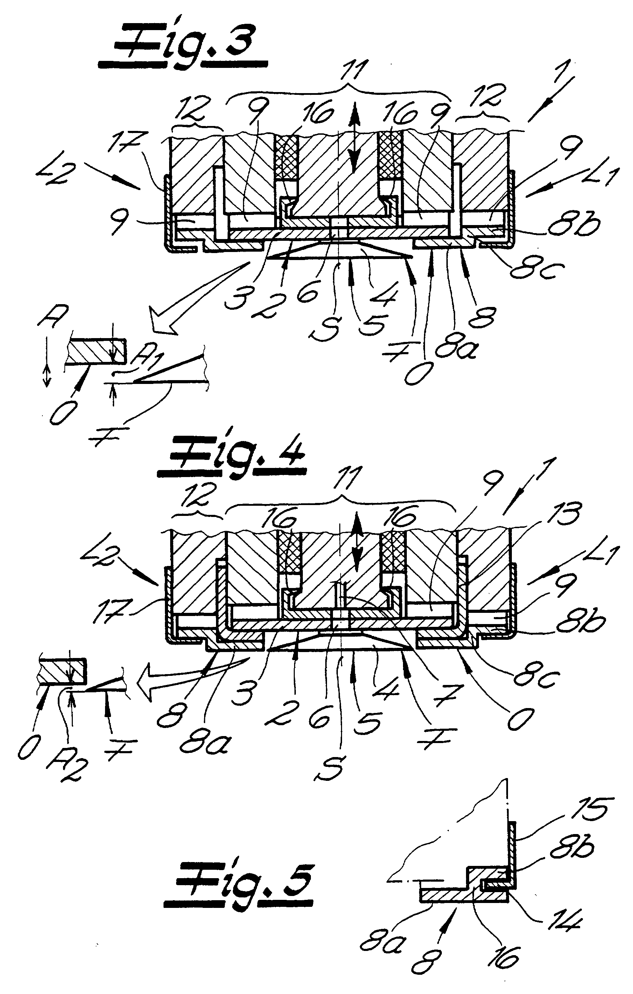

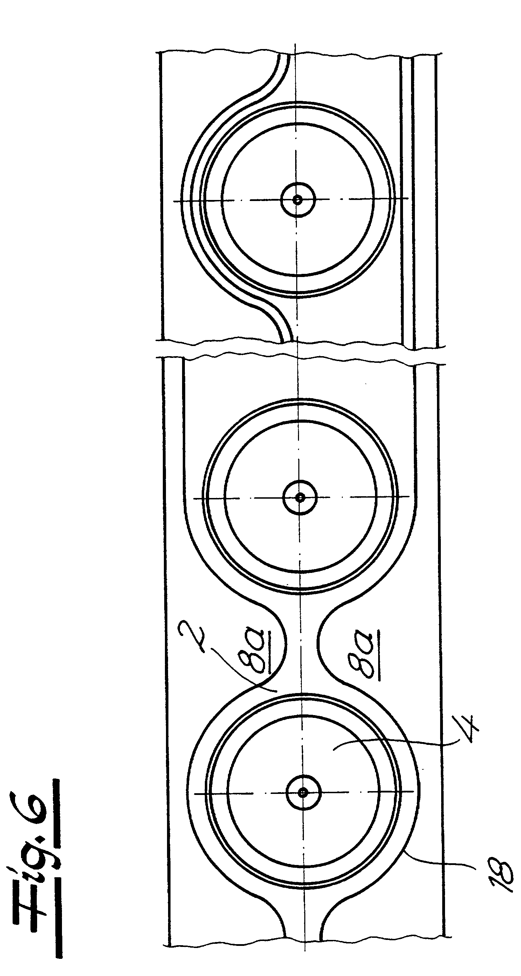

Insbesondere anhand der Fig. 2 bis 5 läßt sich erkennen, daß längsrandseitig des Fördergurtes 2 zumindest ein den Gurtkörper 3 des Fördergurtes 2 frontseitig mittels eines Schutzstreifens 8a übergreifender zusätzlicher Schutzgurt 8 angeordnet ist. Nach dem Ausführungsbeispiel sind zwei Schutzgurte 8 an beiden Längsrandseiten L₁, L₂ des Gurtkörpers 3 vorgesehen. Diese beiden Schutzgurte 8 übergreifen den vorgenannten Gurtkörper 3 mittels jeweiligen Schutzstreifen 8a. Dabei weist der jeweilige Schutzgurt 8 im Querschnitt eine Z-förmige Gestalt mit einem Z-Schenkel bzw. Schutzstreifen 8a und einem anderen Z-Schenkel bzw. Führungsstreifen 8b auf. Beide Z-Schenkel 8a, 8b bzw. Schutzstreifen 8a und Führungsstreifen 8b sind ausweislich der Fig. 3 und 4 parallel zueinander angeordnet. Der die beiden Z-Schenkel 8a, 8b verbindende Z-Steg 8c erstreckt sich demgegenüber vertikal.

Die beiden Schutzgurte 8 können stationär ausgeführt sein, so daß der Fördergurt 2 mit seinem Gurtkörper 3 zwischen den beiden Schutzgurten 8 gleitet, wobei die Oberfläche des Gurtkörpers 3 zumindest teilweise von den Schutzstreifen 8a abgedeckt wird, wie dies insbesondere anhand der Fig. 3 und 4 sowie 2 deutlich wird. Üblicherweise werden die Schutzgurte 8 jedoch mit vorgegebener Schutzgurtgeschwindigkeit bewegt. Diese Schutzgurtgeschwindigkeit ist an eine Fördergeschwindigkeit des Fördergurtes 2 im Sinne eines Synchronlaufes beider Gurte 2, 8 angepaßt. Zu diesem Zweck finden sich am jeweiligen Führungsstreifen 8b angeformte Zähne 9, wie sie auch am Gurtkörper 3 angebracht sind. Diese Zähne 9 greifen in entsprechende Vertiefungen eines Antriebsrades 10 der Haltevorrichtung 1 ein. Folglich sind sowohl Fördergurt 2 als auch die beiden Schutzgurte 8 als Zahnriemen ausgebildet und können gemeinsam mittels des Antriebsrades 10 (synchron) bewegt werden.

Diese Bewegung der sich im Vergleich zum Gurtkörper 3 gegenüberliegenden Schutzgurte 8 erfolgt in der Transportebenenrichtung T, und zwar indem die drei vorgenannten Gurte 2, 8 an der Haltevorrichtung 1 vorbeigeführt werden. Um einen Schutz der als Saugnäpfe 4 ausgebildeten Saugausformungen 4 gegen Abscheren zu gewährleisten, ist der Vertikalabstand A zwischen der Frontfläche F der Saugausformungen 4 und der Oberfläche O der Schutzstreifen 8 variierbar ausgebildet. Dieser Vertikalabstand A nimmt von einer Aufnahmestelle (im Bereich des in Fig. 1 angedeuteten Werkstückes W) bis zu dessen Anlage am Fördergurt 2 ab.

Im einzelnen weisen die Frontflächen F der Saugausformungen 4 im Bereich der vorgenannten Aufnahmestelle der Werkstücke W einen Aufnahmeabstand A₁ auf, wie er in Fig. 3 in der Vergrößerung angedeutet ist. Dieser Aufnahmeabstand A₁ mit über die Schutzstreifen 8 vorkragenden Saugausformungen 4 verringert sich bis zu einem Anlageabstand A₂, wie er in der Fig. 4 dargestellt ist. Bei diesem Anlageabstand A₂ sind die vorgenannten Frontflächen F der Saugausformungen 4 und die Oberfläche O des Gurtkörpers 3 im wesentlichen koplanar angeordnet. Mit anderen Worten wird die Verringerung des Vertikalabstandes A anhand der Fig. 1 in Verbindung mit den Schnitten gemäß Fig. 3 und Fig. 4 deutlich, und zwar dergestalt, daß die Saugausformungen 4 in Förderrichtung FR gleichsam in den Bereich zwischen den beiden Schutzstreifen 8a eintauchen. Durch dieses Eintauchen wird erreicht, daß die Werkstücke W die Saugausformungen 4 nicht mehr abscheren können, weil diese ab Erreichen des Anlageabstandes A₂ zwischen den beiden Schutzstreifen 8a eingebettet sind. Dieser Anlageabstand A₂ ist üblicherweise äußerst gering, kann sogar Null betragen, so daß die Werkstücke nicht nur an den Saugausformungen 4, sondern zugleich auch an der Oberfläche O der Schutzstreifen 8 anliegen.

Diese Eigenschaft des erfindungsgemäßen Fördergurtaggregates läßt sich einerseits so darstellen, daß die Haltevorrichtung 1 gleichsam aus einem inneren Kern 11 sowie einem äußeren Mantel 12 zusammengesetzt ist, wobei der Kern 11 gegenüber dem Mantel 12 vertikal verstellbar ausgeführt ist, wie dies in den Fig. 3 und 4 durch einen Doppelpfeil angedeutet wurde. Dadurch, daß der Kern 11 mit hieran anliegendem Fördergurt 2 gegenüber dem Mantel 12 mit vorbeigeführten Schutzgurten 8 vertikal verschiebbar ausgeführt ist, kann die vorgenannte Variation des Abstandes A durch eine entsprechende und nicht gezeichnete Stellvorrichtung erreicht werden.

Regelmäßig wird jedoch andererseits so vorgegangen, daß die mit dem Fördergurt 2 mitlaufenden Schutzstreifen 8 im Bereich der Aufnahmestelle der Werkstücke W auf dem Gurtkörper 2 aufliegen und im Zuge der Anlage der Werkstücke W an den Fördergurt 2 von dem Gurtkörper 3 abgehoben werden. Dieses Abheben erfolgt dergestalt, daß in Förderrichtung FR ein sich keilförmig öffnender Abstandhalter 13 zwischen der Oberseite des Gurtkörpers 3 und der Unterseite des jeweiligen Schutzstreifens 8 einfährt. Der vorgenannte Abstandhalter 13 kann fest an der Haltevorrichtung 1 angebracht werden. Selbstverständlich ist auch eine entsprechende Vertikalverstellung mittels einer Stellvorrichtung denkbar. Nach dem Ausführungsbeispiel weist der Abstandhalter 13 in Förderrichtung FR im Schnitt ein keilförmiges Profil auf. Dadurch, daß der Fördergurt 2 und die beiden Schutzgurte 8 in Förderrichtung FR bewegt werden, und im Zuge der Bewegung auf den feststehenden Abstandhalter 13 treffen, wird das Abheben der Schutzstreifen 8a vom Gurtkörper 3 automatisch erreicht.

Nach einer Alternative gemäß der Darstellung in Fig. 5 kann das Abheben des Schutzstreifens 8a vom Gurtkörper 3 auch so erfolgen, daß anstelle des gleichsam in die Haltevorrichtung 1 integrierten L-förmigen Abstandhalters 13 eine von außen in den Schutzgurt 8 mit einem Führungssteg 14 eingreifende Abstandsschiene 15 zur Zwangsführung des bzw. der Schutzgurte 8 vorgesehen ist. Der vorgenannte Führungssteg 14 erstreckt sich dabei in eine U-förmige Nut 16 des Schutzgurtes 8 bzw. seines Führungsstreifens 8b hinein. Mittels dieses Führungssteges 14 kann nun das Abheben des Schutzstreifens 8a vom Gurtkörper 3 erreicht werden, indem dieser Führungssteg 14 gegenüber der Haltevorrichtung 1 wiederum vertikal verstellt wird. Regelmäßig geht man jedoch so vor, daß sich der Vertikalabstand des Führungssteges bzw. der Führungsschiene 14 in Förderrichtung FR gegenüber der Unterseite der Haltevorrichtung 1 ändert, d.h., der Führungssteg bzw. die Führungsschiene 14 und damit die Abstandsschiene 15 eine entsprechende Profilierung aufweist.

Nach dem Ausführungsbeispiel weist der Fördergurt 2 an seiner Rückseite - der Haltevorrichtung 1 zugewandt - zwei Dichtlippen 16 auf, welche mit Dichtzähnen in im einzelnen nicht dargestellten Einphasungen in zugehörigen Dichtspalten eingreifen. Die konstruktive Ausgestaltung mag dabei so vorgenommen sein, wie dies in der einleitend bereits angeführten europäischen Patentanmeldung 98 109 930.2-2308 dargestellt ist. Hierauf wird Bezug genommen.

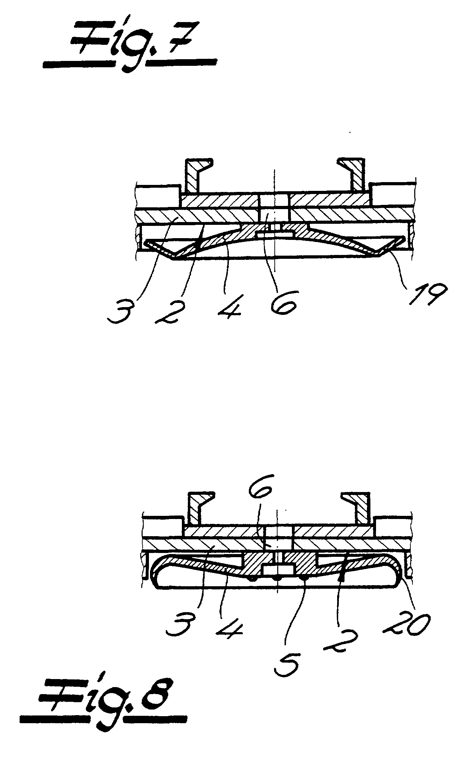

In den Fig. 2 und 6 ist zu erkennen, daß der Schutzstreifen 8a üblicherweise - wie der Führungsstreifen 8b - als Längsstreifen ausgebildet ist. Alternativ hierzu können auch Topologien verwirklicht sein, wonach der Schutzstreifen 8a den Gurtkörper 3 bis auf kreisförmige Aussparungen 18 für die Saugausformungen 4 abdeckt. In jedem Fall ist eine insgesamt spiegelsymmetrische Ausgestaltung im Vergleich zu einer Symmetrieachse S verwirklicht. Die Varianten nach den Fig. 2 und 6 bedingen dabei einen gleichsam Rundumschutz für die Saugausformungen 4, weil die Schutzstreifen 8a - sich jeweils ergänzend und symmetrisch zur Symmetrieachse S - den gesamten Gurtkörper 3 abdecken.

In den Fig. 7 und 8 sind Variationsmöglichkeiten der Saugausformungen 4 bzw. Saugnäpfe 4 dargestellt. Der Saugnapf 4 gemäß Fig. 7 weist eine gleichsam glockenförmige Grundgestalt mit randseitigen Abwinklungen 19 auf, welche den Federweg des Saugnapfes 4 beim Anlegen der Werkstücke W begrenzen. Der Saugnapf 4 nach Fig. 8 besitzt demgegenüber eine sichelförmige Randgestaltung 20, welche für ein besonders inniges Anschmiegen an die Werkstücke W sorgt. Schließlich kann zum Schutz des Führungskörpers 8b ein- oder beidseitig der Haltevorrichtung 1 eine Schutzschiene 17 vorgesehen werden.

## Patentansprüche

1. Fördergurtaggregat für den Transport von Werkstücken (W), insbesondere für den hängenden Transport von tafelförmigen Werkstücken (W) wie Blechen oder Platten, mit
- einem Fördergurt (2) mit Gurtkörper (3) und frontseitigen Saugein- oder -ausformungen (4), in welche Ansaugöffnungen (6) münden, wobei
- die Ansaugöffnungen (6) mit einem Unterdruckkanal (7) in einer Haltevorrichtung (1) mit Unterdruckvorrichtung (1) in Verbindung stehen, wobei ferner
- der Fördergurt (2) mit den hieran anzulegenden Werkstücken (W) an der Unterdruckvorrichtung (1) in Transportebenenrichtung (T) vorbeigeführt und die Werkstücke (W) durch Erzeugen von Unterdruck in dem Unterdruckkanal (7) und damit an den Saugein- oder -ausformungen (4) am Fördergurt (2) festgehalten werden, und wobei
- ein den Gurtkörper (3) mittels eines Schutzstreifens (8a) frontseitig übergreifender zusätzlicher Schutzgurt (8) vorgesehen ist, welcher mit dem Fördergurt (2) mitläuft und im Bereich einer Aufnahmestelle der Werkstücke (W) auf dem Gurtkörper (3) aufliegt,
**dadurch gekennzeichnet, daß**
- an der Haltevorrichtung (1) ein sich Keilförmig öffnender Abstandhalter (3) angebracht ist derart, daß
- der Schutzstreifen (8a) im Zuge der Anlage der Werkstücke (W) an den Fördergurt (2) durch den in Förderrichtung (FR) zwischen der Oberseite des Gurtkörpers (3) und der Unterseite des Schutzstreifens (8a) einfahrenden Abstandhalter (13) von dem Gurtkörper (3) abgehoben wird, oder daß zum Abheben der (des) Schutzstreifen(s) (8a) vom Gurtkörper (3) eine in den Schutzgurt (8) mit einem Führungssteg (14) eingreifende Abstandsschiene (15) zur Zwangsführung der (des) Schutzgurte(s) vorgesehen ist, wobei der Führungssteg (14) hinsichtlich seines Vertikalabstandes zur Unterseite der Haltevorrichtung (1) variabel gestaltet ist.

2. Fördergurtaggregat nach Anspruch 1, **dadurch gekennzeichnet, daß** der Schutzgurt (8) längsrandseitig des Fördergurtes (2) angeordnet ist.

3. Fördergurtaggregat nach einem der Ansprüche 1 oder 2, **dadurch gekennzeichnet, daß** der Schutzgurt (8) stationär ausgebildet ist oder mit einer vorgegebenen Schutzgurtgeschwindigkeit bewegt ist

4. Fördergurtaggregat nach einem der Ansprüche 1 bis 3, **dadurch gekennzeichnet, daß** die Schutzgurtgeschwindigkeit des Schutzgurtes (8) an eine Fördergeschwindigkeit des Fördergurtes (2) im Sinne eines Synchronlaufes beider Gurte (2, 8) angepaßt ist.

5. Fördergurtaggregat nach einem der Ansprüche 1 bis 4, **dadurch gekennzeichnet, daß** der Schutzgurt (8) im Querschnitt Z-förmig mit als ein Z-Schenkel ausgebildetem Schutzstreifen (8a) und als anderem Z-Schenkel ausgeführtem Führungsstreifen (8b) ausgebildet ist.

6. Fördergurtaggregat nach einem der Ansprüche 1 bis 5, **dadurch gekennzeichnet, daß** zwei den Gurtkörper (3) an seinen beiden Längsrandseiten (L₁, L₂) mittels jeweiliger Schutzstreifen (8a) übergreifende, sich gegenüberliegende Schutzgurte (8) vorgesehen sind, welche zusammen mit dem Fördergurt (2) in Transportebenenrichtung (T) angeordnet sind.

7. Fördergurtaggregat nach einem der Ansprüche 1 bis 6, **dadurch gekennzeichnet, daß** der Vertikalabstand (A) von Frontflächen (F) der Saugausformungen (4) und der Oberfläche (O) des bzw. der Schutzstreifen(s) (8a) variierbar ausgebildet ist und vorzugsweise von einer Aufnahmestelle der Werkstücke (W) bis zu deren Anlage am Fördergurt (2) von einem Aufnahmeabstand (A₁) mit über die (den) Schutzstreifen (8) vorkragenden Saugausformungen (4) bis zu einem Anlageabstand (A₂) mit im wesentlichen koplanarer Anordnung der Frontflächen (F) der Saugausformungen und der Oberfläche (O) der (des) Schutzstreifen(s) (8a) abnimmt.

8. Fördergurtaggregat nach einem der Ansprüche 1 bis 7, **dadurch gekennzeichnet, daß** die Saugausformungen (4) als Saugnäpfe (4) mit ggf. innenseitigen Noppen (5) ausgebildet sind.

9. Fördergurtaggregat nach Anspruch 8, **dadurch gekennzeichnet, dass** der jeweilige Saugnapf (4) eine glockenförmige Grundgestalt mit randseitigen Abwinklungen (19) aufweist.

## Claims

1. A conveyor belt unit for conveying workpieces (W), particularly for the suspended conveying of plate-like workpieces (W) such as sheets or panels, comprising
- a conveyor belt (2) having a belt body (3) and suction indentations or protrusions (4) which are disposed on the front side thereof and into which suction openings (6) lead, wherein
- the suction openings (6) communicate with a vacuum duct (7) in a holding device (1) comprising a vacuum device (1), wherein in addition
- the conveyor belt (2), with the workpieces (W) to be placed thereon, is led past the vacuum device (1) in the direction of the plane of conveying (T), and the workpieces (W) are at the same time held against the suction indentations or deformations (4) on the conveyor belt (2) by the generation of a vacuum in the vacuum duct (7), and wherein
- an additional protective belt (8) is provided, which fits over the front side of the conveyor belt (3) by means of a protective strip (8a), and which travels with the conveyor belt (2) and rests on the belt body (3) in the region of a receiving location for the workpieces (W),
**characterised in that**
- a spacer (3) which opens out in the shape of a wedge is provided on the holding device (1), in such a way that
- in the course of the placement of the workpieces (W) on the conveyor belt (2) the protective strip (8a) is raised from the belt body (3) by the spacer (13) which moves in the conveying direction (FR) between the upper side of the belt body (3) and the underside of the protective strip (8a), or, in order to raise the protective strip(s) (8a) from the belt body (3), a spacer strip (15), a guide limb (14) of which fits into the protective belt (8), is provided for the forced guidance of the protective belt(s), wherein the vertical distance of the guide limb (14) from the underside of the holding device (1) can be varied.

2. A conveyor belt unit according to claim 1, **characterised in that** the protective belt (8) is disposed at the longitudinal edge of the conveyor belt (2).

3. A conveyor belt unit according to either one of claims 1 or 2, **characterised in that** the protective belt (8) is fixed or is moved at a predetermined protective belt speed.

4. A conveyor belt unit according to any one of claims 1 to 3, **characterised in that** the protective belt speed of the protective belt (8) is matched to a conveying speed of the conveyor belt (2) in the sense of a synchronous movement of both belts (2, 8).

5. A conveyor belt unit according to any one of claims 1 to 4, **characterised in that** the protective belt (8) is Z-shaped in cross-section and comprises the protective strip (8a) as one limb of the Z, and a guide strip (8b) as the other limb of the Z.

6. A conveyor belt unit according to any one of claims 1 to 5, **characterised in that** two opposite protective belts (8) are provided which fit over the belt body (3) at its two longitudinal side edges (L₁, L₂) by means of respective protective strips (8a), and said protective belts, together with the conveyor belt (2), are disposed in the direction of the plane of conveying (T).

7. A conveyor belt unit according to any one of claims 1 to 6, **characterised in that** the vertical distance (A) from the front faces (F) of the suction protrusions (4) to the surface (O) of the protective strip(s) (8a) is variable, and, from a receiving location for the workpieces (W) until the latter contact the conveyor belt (2), preferably decreases from a receiving distance (A₁) comprising suction protrusions (4) which project beyond the protective strip(s) (8), to a contact distance (82) comprising a substantially coplanar arrangement of the front faces (F) of the suction protrusions and the surface (O) of the protective strip(s) (8a).

8. A conveyor belt unit according to any one of claims 1 to 7, **characterised in that** the suction protrusions (4) are constructed as suction cups (4), optionally with studs (5) on their inner faces.

9. A conveyor belt unit according to claim 8, **characterised in that** the respective suction cup (4) has a basic shape in the form of a dish with angled portions (19) at the edges thereof.

## Revendications

1. Convoyeur à bande pour le transport de pièces (W), en particulier pour le transport en suspension de pièces en forme de panneaux (W) telles que des tôles ou des plaques, comprenant
- une bande de convoyage (2) avec un corps de bande (3) et des structures frontales d'aspiration rentrantes ou sortantes (4) dans lesquelles débouchent des ouvertures d'aspiration (6),
- les ouvertures d'aspiration (6) communiquant avec un canal à dépression (7) situé dans un dispositif de retenue (1) avec dispositif à dépression (1),
- la bande de convoyage (2) avec les pièces (W) à appliquer dessus défilant par ailleurs devant le dispositif à dépression (1) dans le sens du plan de transport (T) et les pièces (W) étant plaquées contre la bande de convoyage (2) par la production d'une dépression dans le canal à dépression (7) et donc au niveau des structures d'aspiration rentrantes ou sortantes (4), et
- une bande de protection supplémentaire (8) chevauchant frontalement le corps de bande (3) au moyen d'un rebord de protection (8a) étant prévue, laquelle se déplace avec la bande de convoyage (2) et repose sur le corps de bande (3) dans la zone d'un point de prise en charge des pièces (W),
**caractérisé en ce que**
- sur le dispositif de retenue (1) est disposé un élément d'écartement (13) s'ouvrant en forme de coin, de sorte qu'au cours de l'application des pièces (W) contre la bande de convoyage (2) le rebord de protection (8a) est décollé du corps de bande (3) par l'élément d'écartement (13) s'engageant dans le sens d'avance (FR) entre le dessus du corps de bande (3) et le dessous du rebord de protection (8a), ou, pour décoller le ou les rebords de protection (8a) du corps de bande (3), il est prévu un rail d'écartement (15) s'engageant dans la bande de protection (8) avec une barrette de guidage (14) pour soumettre la ou les bandes de protection à un guidage forcé, la barrette de guidage (14) étant conçue de manière variable du point de vue de sa distance verticale par rapport au dessous du dispositif de retenue (1).

2. Convoyeur à bande selon la revendication 1, **caractérisé en ce que** la bande de protection (8) est disposée du côté du bord longitudinal de la bande de convoyage (2).

3. Convoyeur à bande selon l'une des revendications 1 ou 2, **caractérisé en ce que** la bande de protection (8) est conçue de manière fixe ou est déplacée à une vitesse de bande de protection prédéfinie.

4. Convoyeur à bande selon l'une des revendications 1 à 3, **caractérisé en ce que** la vitesse de bande de protection de la bande de protection (8) est adaptée à une vitesse de convoyage de la bande de convoyage (2) pour obtenir un déplacement synchrone des deux bandes (2, 8).

5. Convoyeur à bande selon 'une des revendications 1 à 4, **caractérisé en ce qu'**en section transversale la bande de protection (8) est conçue en forme de Z avec le rebord de protection (8a) constituant l'une des branches du Z et la barrette de guidage (8b) constituant l'autre branche du Z.

6. Convoyeur à bande selon l'une des revendications 1 à 5, **caractérisé en ce qu'**il est prévu deux bandes de protection en vis-à-vis (8) qui, au moyen de rebords de protection respectifs (8a), chevauchent le corps de bande (3) sur ses deux côtés latéraux longitudinaux (L₁, L₂) et qui, avec la bande de convoyage (2), sont disposées dans le sens du plan de transport (T).

7. Convoyeur à bande selon l'une des revendications 1 à 6, **caractérisé en ce que** la distance verticale (A) entre les faces frontales (F) des structures d'aspiration sortantes (4) et la surface (O) du ou, respectivement, des rebords de protection (8a) est variable et, de préférence, diminue, d'un point de prise en charge des pièces (W) à leur contact avec la bande de convoyage (2), d'une distance de prise en charge (A₁) avec les structures d'aspiration sortantes (4) dépassant du ou des rebords de protection (8) jusqu'à une distance de contact (A₂) avec une position sensiblement coplanaire des faces frontales (F) des structures d'aspiration sortantes et de la surface (O) du ou des rebords de protection (8a).

8. Convoyeur à bande selon l'une des revendications 1 à 7, **caractérisé en ce que** les structures d'aspiration sortantes (4) sont conçues sous la forme de ventouses (4) avec le cas échéant des plots intérieurs (5).

9. Convoyeur à bande selon la revendication 8, **caractérisé en ce que** chaque ventouse (4) présente une forme de base en cloche avec des parties latérales coudées (19).
